**Europäisches Patentamt**

**European Patent Office**

**Office européen des brevets**

(19)

(11) Publication number: **0 022 887**
**B1**

(12) **EUROPEAN PATENT SPECIFICATION**

(45) Date of publication of patent specification: **21.12.83**

(51) Int. Cl.³: **F 24 J 3/02**

(21) Application number: **79301473.9**

(22) Date of filing: **24.07.79**

(54) **Support structure for a large dimension parabolic reflector and large dimension parabolic reflector.**

(43) Date of publication of application:
**28.01.81 Bulletin 81/4**

(45) Publication of the grant of the patent:
**21.12.83 Bulletin 83/51**

(84) Designated Contracting States:
**AT BE CH DE FR GB IT LU NL SE**

(56) References cited:
**FR - A - 824 726**
**FR - A - 2 112 013**
**FR - A - 2 257 067**
**FR - A - 2 275 740**
**FR - A - 2 349 011**
**US - A - 3 618 111**
**US - A - 3 977 773**
**US - A - 3 993 528**
**US - A - 3 998 206**

(73) Proprietor: **Wood, Douglas E.**
**Box 32**
**Fox Island, WA 98333 (US)**

(72) Inventor: **Wood, Douglas E.**
**Box 32**
**Fox Island, WA 98333 (US)**

(74) Representative: **Everitt, Christopher James Wilders et al,**
**F.J. CLEVELAND & COMPANY 40/43 Chancery Lane**
**London WC2A 1JQ (GB)**

Courier Press, Leamington Spa, England.

Support structure for a large dimension parabolic reflector and large dimension parabolic reflector

The present invention is directed toward the art of support structures for parabolic reflectors, and more particularly concerns a support structure for a large parabolic reflector which is intended primarily for use as a solar reflector and which is comprised of a large number of small reflecting sections arranged into a paraboloid.

Large dimension parabolic reflectors, of the order of twenty feet in diameter and larger, have historically been proposed for use in a variety of applications, including use in a solar collection system. However, large dimension parabolic reflectors have always been difficult and expensive to manufacture and hence are presently considered impractical, except perhaps in special purpose applications, such as large telescopes.

In addition to the cost involved in producing such a parabolic reflector per se, the support structure for such reflectors also is complicated and expensive. Additionally, the support structure must be designed for the particular reflector application, and a support structure suitable for one application would not necessarily be suitable for any other reflector applications.

For instance, those support structures which have been developed for parabolic reflector telescopes are not suitable for solar collector applications, wherein the reflective surface must be as open as possible to the sun, and wherein the support structure must be capable of withstanding harsh weather environments, including high winds and hail, without damage to either the support structure or the reflector.

Other large-dimension curved structures besides parabolas have been constructed using a plurality of relatively small size plane sections of various forms. An example of using relatively small sections to construct a spherical structure is shown in US—A—2,978,704, titled: Random Structural Devices. As suggested herein, large dimension parabolid reflectors can also be constructed with small-size sections, at considerable cost savings over a single surface reflector.

Although such a construction technique may significantly reduce the cost of producing a parabolic reflector per se, the problems of adequately supporting and protecting that structure, especially under extreme weather conditions, remain. To the best of the inventor's knowledge, there is very little information available concerning support structures for large-dimension parabolic reflectors intended for outdoor use, especially where the reflector comprises a plurality of relatively small sections and is intended for use as a solar collector.

Necessarily, such a support structure must have the proper strength in order to support the plurality of reflecting sections without breakage during normal operation, and must be capable of protecting the reflecting sections in weather extremes. It must further interfere only minimally, if at all, with the amount of sun reaching the reflecting surfaces of the individual sections.

Additionally, such a support structure should be relatively inexpensive, so that the combined support structure-parabolic reflector may be economically practical as a solar collector. Further, the support structure should be relatively simple and inexpensive to install on site, should be capable of supporting a parabolic reflector without counterweights, and must be capable of accurately tracking the sun in its movement across the sky.

US—A—3,618,111 discloses an expandable truss paraboloidal antenna structure which comprises hinged struts forming interconnected hinged triangular truss modules which are aligned in two geometric planes with the struts terminating at junctions on the inner and outer surfaces of the paraboloidal shaped structure. The combination of hinge struts and reflector panels is packaged in a compact unit and then is deployed by being automatically unfolded outwardly by spring means in certain of the hinges. When expanded, the surface struts on the geometric surfaces form substantially equilateral triangular truss modules on the two surfaces with the peripheral distance of the inner or concave surface being shorter than that of the outer or convex surface giving the desired curvature. The diagonal struts are also connected to form isosceles triangles relative to the surface struts forming triangular pyramid truss modules whose height equals the thickness of the antenna frame structure. The truss modules are thus wrapped on the curve forming the parabolic surface. The circumferential periphery or rim of the reflector supported by the truss structure is substantially scollaped, that is to say it curves in a complex manner similar to that of an umbrella. That complex rim necessitates the use of the complex supporting truss structure in order to maintain the structural integrity of the overall matrix structure. Furthermore the complex rim is insufficiently stable for the use of stabilising rim struts to be employed with a consequential limiting of the loading which the structure can withstand.

According to one aspect of this invention there is provided a support structure for a large-dimension parabolic reflector, such as a solar reflector or the like, which comprises a plurality of triangular reflecting members which are relatively small in size compared to the size of the entire reflector and which conveniently are rigid, the support structure comprising one rigid support matrix comprising a plurality of strut-like members joined together at matrix joints to form a plurality of triangular sections arranged in a parabolic configuration, terminating in a rim which lies completely in a single plane; one set of standoff elements each connected to said one rigid support matrix at a respective one of said matrix joints and extending away from said one rigid support matrix; and means mounted on said standoff elements for securing said triangular reflecting members in position away from said one support matrix.

According to another aspect of this invention there is provided a large dimension parabolic reflector apparatus comprising a first rigid support matrix comprising a plurality of strut-like members joined together at matrix joints to form a plurality of triangular sections arranged into a parabolic configuration, terminating at a rim which lies completely in a single plane; a plurality of triangular reflecting members which conveniently are rigid, arranged to form a parabolic reflector surface having approximately the configuration of said first rigid support matrix; a plurality of standoff elements connected at said matrix joints and at other points along said strut-like members; and means mounted on said standoff elements for supporting the triangular reflecting members in position away from said first rigid support matrix in such a manner that the triangular reflecting members form the parabolic reflector surface.

A more thorough understanding of the invention may be obtained by a study of the following detailed description taken in connection with the accompanying drawings in which:

Figure 1 is a diagram showing the principal components of a solar collection system, including support apparatus in which the present invention is embodied.

Figure 2 is a perspective view of one embodiment of the present invention, with a single support structure.

Figure 3 is an exploded view of one portion of the embodiment of Figure 2.

Figure 4 is a partial perspective view of another embodiment of the present invention, with a double support structure.

Figure 5 is an exploded view of a portion of the embodiment of Figure 4.

Figure 6 is a perspective view of a standoff element, a connecting hub, and a securing member which connect the two support structures and the reflecting sections of the embodiment of Figure 4.

Figure 7 is a perspective view showing the axis structure between the support structure for the parabolic reflector and apparatus for tracking the sun.

Figure 8 is a perspective view showing the structure for securing the individual reflecting sections in place to form a parabolic reflector.

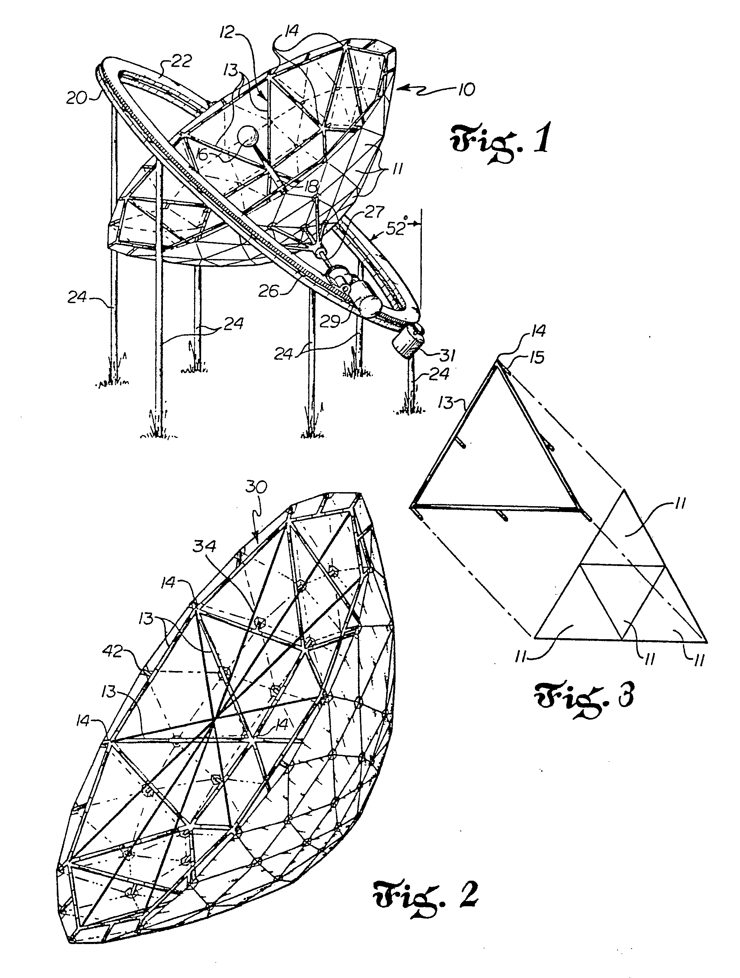

Referring now to Figure 1, the reflector support structure in which the present invention is embodied is shown in the context of a complete solar energy collection system. A parabolic reflector is shown generally at 10, and is comprised of a plurality of triangular sections 11-11 of conventional mirrored glass. Triangular sections 11-11 may be plane or slightly curved or dished. Triangular sections 11-11 are arranged and positioned such that their respective apex points lie on the surface of a true parabola. Reflector 10 thus is substantially parabolic.

In the embodiment shown in Figure 1, a first reflector support matrix, also of generally parabolic configuration, shown generally at 12, is provided inside parabolic reflector 10. Reflector support matrix 12 comprises a plurality of elongated rod-like elements 13-13 which are joined together at their ends, at joints 14-14 to form a plurality of intersecting open triangles in a generally parabolic arrangement. The joints 14-14, in the configuration shown, lie substantially on the surface of a true imaginary parabola.

Extending outwardly from each joint 14, and fixedly connected thereto, is an elongated standoff element 15 which has located therealong positioning elements (not shown in Figure 1) which may be moved longitudinally along standoff elements 15, and which hold the triangular sections 11-11 at their apexes in their parabolic arrangement.

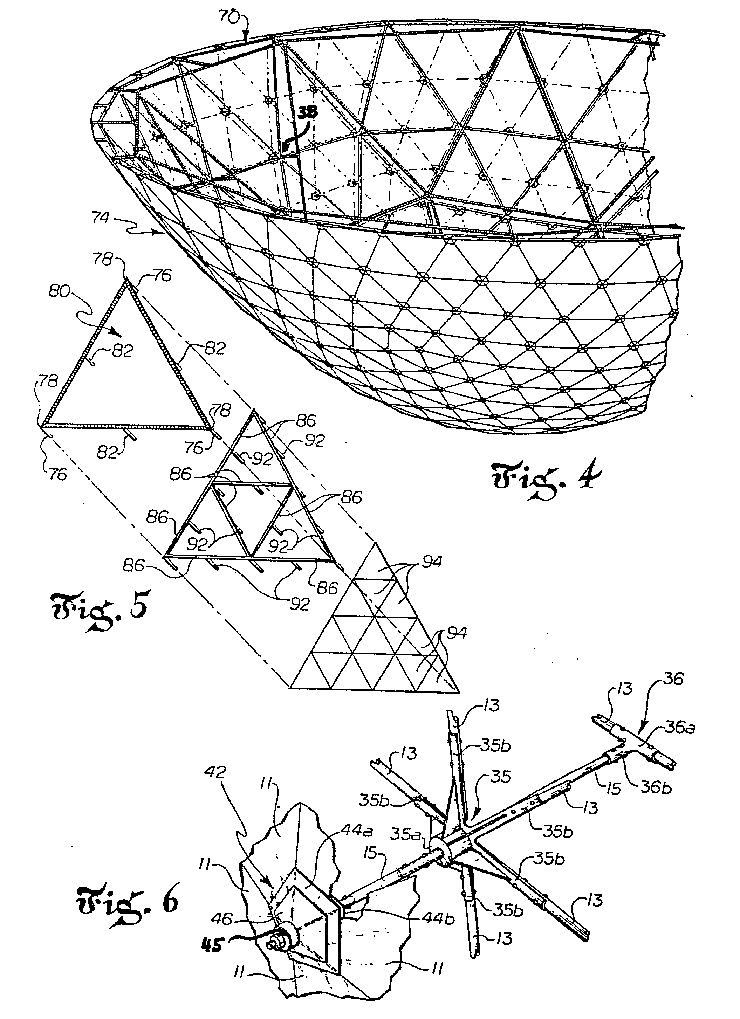

In Figure 1, four triangular sections 11-11 are shown for each triangular portion of support matrix. This is shown most clearly in Figure 3. In an even more simple embodiment, the triangular sections 11-11 could be the same size as the triangular support matrix portions. A more complicated embodiment, using two support matrixes, wherein 16 triangular sections 11-11 are used for each triangular portion of the first support matrix is shown in Figures 4 and 5.

A boiler 16 of conventional design and of a size which is commensurate with parabolic reflector 10, is located substantially at the focal point of parabolic reflector 10 and parabolic support matrix 12. An elongated support element 18 connects boiler 16 and the back center of the parabolic support matrix 12, and supports boiler 16 at the focal point thereof. The boiler 16 may take various configurations, and may be a mercury heat exchanger. An example of a boiler which may be useful is described in US—A—4,019,868, issued to Sebacher, et al, on April 26, 1977 and titled: Solar Hydrogen Generator.

Encircling parabolic reflector 10 and parabolic support matrix 12 is a terrain support apparatus which includes first and second substantially circular support rings 20 and 22 which have diameters slightly greater than that of the parabolic reflector 10 which they encircle. In the case of a 9.09 metres (30 feet) diameter parabolic reflector, for instance, the diameter of the support rings 20 and 22 is approximately 9.64 metres (31.82 feet). The first support ring 20 is stationary and is fixedly supported off the ground at an angular orientation of 52° to the vertical by a plurality of upright posts 24-24. That selected angle is equal to the latitude of the particular terrain location of the collector. It should be understood that the angle of the support rings will vary and be dependent upon the latitude of the location of the apparatus. The second support ring 22, which is of substantially the same configuration and size as the first support ring 20, is positioned on top of the first support ring and rotates relative to the first support ring by means of rollers or similar conventional devices 26 through a motor-driven gearing 31.

Parabolic reflector 10 and parabolic support matrix 12 are secured to an axis structure 27 which is in turn rotatably connected to second support ring 22 through conventional means, such as a motor-driven gear arrangement 29. This arrangement permits parabolic reflector 10 to be rotated within support rings 20 and 22.

In operation, second support ring 22 is rotated relative to first support ring 20 at specified time intervals to maintain the correct reflector azimuth for the parabolic reflector 10, while parabolic reflector 10 itself is periodically rotated, through axis structure 27, to maintain a correct reflector altitude. Hence, parabolic reflector 10 follows the path of the sun as it moves from horizon to horizon.

The sun's rays, when they strike the inside reflecting surface of parabolic reflector 10, are focused by the individual triangular sections 11-11 to the boiler 16. The boiling medium in boiler 16 is raised to a temperature between 315°C and 540°C (600°F and 1000°F) when plane triangular sections are used, and between 1650°C and 3315°C (3000°F and 6000°F), when curved triangular sections are used, resulting in superheated steam which can then be utilized to drive conventional steam generators or similar means.

Figure 2 shows in more detail the parabolic reflector 10 and parabolic support matrix 12 shown in Figure 1. Parabolic support matrix 12 comprises a plurality of elongated struts or rods 13 joined together at their ends, at joints 14, in such an arrangement as to form the parabolic support matrix shown in Figure 2.

The arrangement of struts 13-13 form a plurality of open triangles, with each strut 13, except for those in the top row, forming one side of 2 adjacent triangles. The specific arrangement of the triangles and their relative sizes can be obtained in a number of ways, but in the instant case was achieved by projecting the lower half of a subdivided isohedron onto a true parabolic surface.

Each of the joints 14-14 lies substantially on the surface of a true parabola, while struts 13-13 extend in a straight line between joints 14-14. The upper row of struts 13-13 all lie in the same plane and form rim 30 of the support matrix, as shown in Figure 2, while the remainder of support matrix 12 extends downward therefrom in a parabolic configuration. The individual struts 13-13 are of varying length, depending upon their location in the support matrix.

In the embodiment shown, struts 13-13 are lengths of 3.75 cm/dia (1 1/2") galvanized pipe, since galvanized pipe offers relatively high strength at a low cost. Other materials, however, such as aluminum tubing, can be effectively used.

Stabilizing rim 30 are a plurality of guide wires 34 (shown in Figure 2 but not Figure 1) which run cross-ways of rim 30 from each joint 14 on the rim to an opposing joint on the opposite side of the rim. Hence, each joint 14 or rim 30 is connected by stiff wire, or small-diameter tubing, to an opposing joint on the rim. Guide wires 34 provide necessary support structure rigidity.

The structure of the joints 14-14 is shown more clearly in Figure 6. The construction of each joint 14 will vary depending upon its location, and whether there is more than one support matrix provided. Each joint will include a full hub or collar element which is shown generally at 35, a triangular section securing element, shown generally at 42, and a standoff element 15. When two support matrixes are used a modified hub 36 is included at each joint. A full hub 35 is used wherever the struts forming either the first or second matrixes are joined. A modified hub 36 is used for attaching a standoff element 15 to a strut 13 intermediate of its ends.

The particular form of joint 14 shown in Figure 6 is shown at 38 in Figure 4. It includes a tubular T shaped modified hub 36, having a cross member 36a which is secured to a single strut 13 in the first support structure, and a base member 36b, into which one end of standoff element 15 is inserted. The modified hub 36 is positioned intermediate of the strut 13 and is used both on the first and second support structures to permit subdivision of each structural support portion.

Midway along standoff element 15 in Figure 6 is a full hub 35 which receives the ends of various numbers of struts 13, depending upon location, in a second support matrix. Hub 35 includes a central ring 35a, through the centre of which standoff element 15 extends, and a plurality of fins 35b-35b which extend radially outward from central ring 35a and which receive the ends of struts 13.

Standoff element 15 in Figure 6 is a rod-like strut which extends perpendicularly from modified hub 36 and through full hub 35 so that it hence extends perpendicularly from a plane which is tangent to an imaginary parabolic surface connecting each joint of the parabolic support matrix.

The length of standoff element 15 depends upon the number of parabolic support matrixes used. In the embodiment of Figure 2, for instance, only one support matrix is shown, and the length of standoff element 15 is approximately 5 cm (2 inches). In the embodiment of Figure 4, standoff element 15 might be approximately 10 cm (4 inches).

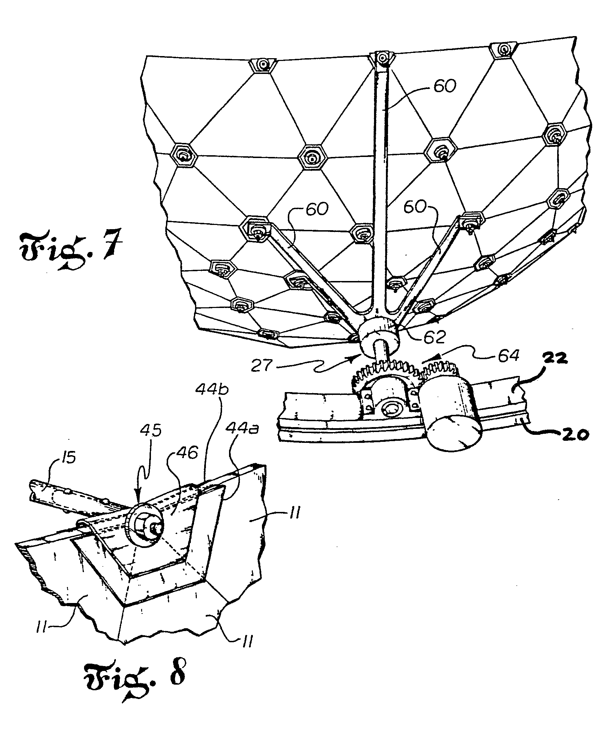

Located near the end of standoff element 15 is securing element 42, which holds one apex of several triangular reflecting sections 11-11 firmly in place. Positioning element 42 of Figure 6 comprises two relatively thin members 44a, 44b of a flexible but stiff material, such as a stiff rubber or teflon, which, when moved close together, hold the apexes of several triangular reflecting sections 11-11 in place to form the parabolic reflector 10. When stiff members 44a and 44b are held close enough together by plate 46 and by nut and washer arrangement 45, several triangular reflecting sections 11-11 may be held firmly in position, as shown in Figures 6 and 8. Members 44a and 44b are sufficiently flexible, however, to permit a slight movement of reflecting sections 11-11 to take up a certain amount of environmental stresses, particularly changes in temperature, without breakage.

At no time will securing element 42, and hence reflecting sections 11-11, come into contact with the parabolic support matrix 12, and hence, no stress will be placed on reflecting sections 11-11 by the parabolic reflector structure itself.

A further key structural advantage to securing element 42 is that it may be moved longitudinally along standoff element 15, permitting individual focusing of each reflecting sections 11-11 onto boiler 16. In this manner, the parabolic reflector 10 may be tuned to maximum effectiveness.

Reflecting sections 11-11 may be comprised of a number of different materials, among them being glass and polished metal, such as aluminum. It has been found, however, that the conventional double-sided mirror, silvered on the backside is the best when both cost and reflective quality are considered. The support structure in which this invention is embodied permits the use of this relatively inexpensive material.

The reflecting sections 11-11 may be plane, which is a relatively easy and inexpensive shape to manufacture, or they may be slightly curved. If reflecting sections 11-11 are curved, the total reflecting quality of the complete parabolic reflector 10 will be better than with plane reflecting sections, and the solar collector operation will improve. The National Aeronautics and Space Administration has developed a method of fabricating curved silvered glass which is suitable for use with the present invention. It is available on microfilm under the number NTIS-N75-32894/8ST in engineering libraries of several universities, under the title "Light Weight Reflector Assembly and Method". It should be understood, however, that the present invention is capable of functioning efficiently with plane reflecting sections.

In the embodiment shown in Figure 2, the support matrix 12 is provided inside the reflector 10. This configuration has been found to reduce the amount of reflected sunlight to the boiler by approximately 15%, which is acceptable in view of the cost savings produced in construction of large parabolic reflectors by use of the support structures disclosed herein.

First and second support rings 20, 22 may be constructed of a variety of materials, but in the embodiment shown are aluminum tubing, approximaterly 10 cm (4 inches) thick and 23 cm (9 inches) wide. It should be understood, however, that rings 20 and 22 may take various configurations. They may be square or rectangular in cross-section or they may be two non-girders formed into circles.

Figure 7 shows in more detail the axis structure 27 by which the combination of parabolic reflector 10 and parabolic support matrix 12 is rotatably connected to support ring 22. A series of struts 60 are connected between (1) the ends of a number of standoff elements which extend from hubs 35, and (2) a common joint 62, which in turn extends into a short axle and gear arrangement 64, which controls rotation of the combination relative to first and second support rings 20 and 22. Axis structure 27 extends through reflector 10 and support matrix 12 at approximately their combined center of gravity, and hence, no counterweights are needed to stabilize the reflector during rotation.

Such an arrangement permits support matrix 12 and hence, parabolic reflector 10 as well, to follow the path of the sun as it moves across the sky. It also permits reflector support matrix 12 and reflector 10 to be rotated so that they face the terrain. Typically, a fairly rigid lightweight protective covering (not shown) may be provided over the experior of the reflector 10 so that when the support matrix 12 and reflector 10 are rotated upside down, the protective covering is exposed to the weather. The protective covering serves to protect the reflector during extreme weather conditions, in particular, hail, dust storms, and high winds.

In the embodiment of Figures 4 and 5, an intermediate parabolic support matrix 70 is provided between a base parabolic support matrix 72 and a parabolic reflector 74. A substantial portion of the complete structure is shown in Figure 4.

The arrangement of this embodiment is shown most clearly in Figure 5, wherein the relationship between a single portion of the base parabolic support matrix is shown with its corresponding intermediate support matrix and corresponding reflector structure. As with the embodiment of Figures 2 and 3, the more complex embodiment includes a first set of standoff elements 76 located at each joint 78 of each triangular portion 80 of the base parabolic support structure, and a second set of standoff elements 82 intermediate of each pair of joints 78-78. Hubs (not shown) such as hubs 35 in Figure 6, are located at each joint 78 while modified hubs (not shown), such as hubs 36 in Figure 6, are used intermediate of joints 78.

The intermediate parabolic support matrix 70 comprises a plurality of struts 86 which are approximately half as long as the struts comprising base parabolic support matrix 72. Each strut 86 is connected between hubs (not shown) which are similar to hubs 35 in Figure 6, which are positioned on standoff elements 76 and 82, as shown in Figure 5. This results in a four triangle section of intermediate support matrix for each portion 80 of base support matrix. Struts 86 may be lighter in weight than those struts comprising the base parabolic support matrix. For example, struts having a diameter of 1.27 cm ($\frac{1}{2}$ inch) and a wall thickness of 1.6 mm (1/16th inch) have been found to be useful for 9.09 metres (30 feet) diameter reflector. In addition to standoff elements 76 and 82 which extend through the hubs which support struts 86, further standoff elements 92 are provided, located intermediate each strut 86 and connected thereto by a modified hub (not shown) similar to hub 36 shown in Figure 6.

At the end of the standoff elements 76, 82 and 92, a securing element (not shown) similar to element 42 in Figure 6 is provided to hold the reflecting sections which fit together to comprise the parabolic reflector 10.

Because standoff elements 76, 82 and 92 all support individual reflecting sections 94—94, there are four reflecting sections for each intermediate support matrix section, and hence 16 reflecting sections for each portion 80 of the base support matrix 72. This arrangement is shown most clearly in Figure 5. In the embodiment of Figure 4, which was developed by projecting a subdivided isohedron onto a parabolic surface, there are 40 triangular shaped portions which comprise the base parabolic support matrix. Hence, a total of 640 reflecting sections will comprise the parabolic reflector 10.

The support structure described above is advantageous, as it has sufficient strength to support the reflecting sections, and to take up environmental stress, so as to minimize possible damage to the reflecting sections. In addition, such a structure permits the reflecting sections to be individually focused on to a boiler, increasing the potential efficency of the reflector. In the arrangement shown above, each reflecting section reflects substantially the same amount of light to the boiler when the reflector is properly oriented with respect to the sun.

The above-described support structure permits, in practical terms, the use of plane triangles to construct a large-dimension parabolic reflector. Such a complete structure can be used advantageously in solar collection systems. The support structure is relatively inexpensive, as it can be made from commercially available, relatively inexpensive, materials, and can be assembled quickly and easily on site. It has extremely high strength, and can protect the reflector structure against weather extremes, particularly high winds and hail, without blocking a substantial amount of light from the reflector.

It should be understood, for instance, that although the support matrix is shown as being interior of the reflecting sections, the same principles could be used to provide an exterior support matrix. Additionally, it should be understood that the particular hub configuration shown is not critical. Various configurations may be successfully used.

**Claims**

1. A support structure for a large dimension parabolic reflector (10, 74) which comprises a plurality of triangular reflecting members (11, 94) relatively small in size compared to the size of the entire reflector, said support structure comprising one rigid support matrix (12, 72) comprising a plurality of strut-like members (13) joined together at matrix joints (14, 78) to form a plurality of triangular sections (80) arranged in a parabolic configuration, one set of standoff elements (15, 76) each connected to said one rigid support matrix (12, 72) at a respective one of said matrix joints (14, 78) and extending away from said one rigid support matrix (12, 72), and means (42) mounted on said standoff elements (15, 76) for securing said triangular reflecting members (11, 94) in position away from said one support matrix (12, 72), characterised in that said one rigid support matrix (12, 72) terminates in a rim (30) which lies completely in a single plane.

2. A structure according to Claim 1, wherein said reflector (10, 74) is substantially equidistant from said one rigid support matrix (12, 72) over its entire surface.

3. A structure according to Claim 1 or Claim 2, wherein the securing means (42) on each standoff element (15, 76) is movable along that standoff element (15, 76) so as to permit focusing of the reflecting members (11, 94).

4. A structure according to Claim 3, wherein said securing means (42) are sufficiently flexible to permit slight movement of the reflecting members (11, 94) without damage to the reflecting members (11, 94).

5. A structure according to any one of Claims 1 to 4, wherein said standoff elements (15, 76) extend outwardly from said one rigid support matrix (12, 72) at said matrix joints (14, 78) perpendicular to a plane which is tangent to said continuous surface at said matrix joint 14, 78).

6. A structure according to any one of Claims 1 to 5, wherein said standoff elements (15, 76) are of sufficient length and there is sufficient distance between said one rigid support matrix (12, 72) and said securing means (42) so as to prevent contact between said strut-like members (13) and the reflecting members (11, 94).

7. A structure according to any one of Claims 1 to 6, wherein the area of each triangular section (80) of said one rigid support matrix (12, 72) is substantially that of four of the triangular reflecting members (11, 94) which are of substantially equal area and including another set of standoff elements (82), each connected to a respective one of the strut-like members (13) at a location intermediate the respective pair of matrix joints (14, 78) between which that strut-like member (13) extends, and securing means (42) mounted on the other set of standoff elements (82) to provide, together with the securing means (42) mounted on the standoff elements (15) of said one set, support for a respective group of four of the triangular reflecting members (11, 94) arranged side by side opposite each of the triangular sections (80).

8. A structure according to any one of Claims 1 to 7, including another rigid support matrix (70) which comprises a plurality of strut-like members (86) joined together to form a plurality of triangular sections which approximate the configuration of the curved surface, wherein the other support matrix (70) is positioned between said one support matrix (72) and the reflector (74), and wherein said other support matrix (70) is arranged so that the area of each triangular section of said one support matrix (72) encompasses four triangular sections (80) of said other support matrix (70).

9. A structure according to Claim 8, including further standoff elements (92) each connected to a respective one of the strut-like members (86) of said other support matrix (70) at a location intermediate the respective pair of matrix joints (78) between which that strut-like member (86) extends, and securing means (42) mounted on the further standoff elements (92) for supporting four triangular reflecting members (94) in each triangular section of said other support matrix (70).

10. A structure according to any one of Claims 1 to 9, for supporting a large dimension parabolic solar reflector (10, 74), including a tracking support means supporting said one support matrix (12) for tracking the path of the sun.

11. A structure according to Claim 10, including means for following the azimuth of the sun with said one support matrix (12) and means (29) for following the altitude of the sun with said one support matrix (12).

12. A structure according to Claim 11, wherein said means for following the azimuth of the sun includes first and second tracking members (20 and 22), said first tracking member (20) being supported stationary in a predetermined angular position relative to the ground and said second tracking member (22) being supported parallel to said first tracking member (20), and being connected to said one support matrix (12), and further includes means (31) for rotating said second tracking member (22) relative to the first tracking member (20), so that the second tracking member (22) may be rotated in order for said one support matrix (12) to follow the azimuth of the sun.

13. A structure according to Claim 12, wherein said means for following the altitude of the sun includes axis means (27) rotatably connecting said one support matrix (12) to said second tracking member (22) in a plane substantially perpendicular to the plane of rotation of said second tracking member (22), so that said one support matrix (12) may be rotated to follow the altitude of the sun.

14. A structure according to Claim 13, wherein an imaginary straight line connecting the axis means (27) on opposite sides of said one support matrix (12) extends substantially through the center of gravity of said one support matrix (12).

15. A large dimension parabolic reflector apparatus, comprising one rigid support matrix (12, 72) comprising a plurality of strut-like members (13) joined together at matrix joints (14, 78) to form a plurality of triangular sections (80) arranged into a parabolic configuration; a plurality of triangular reflecting members (11, 94) arranged to form a parabolic reflector surface (10, 74) having approximately the configuration of said one rigid support matrix (12, 72); a plurality of standoff elements (15) connected at least at said matrix joints (14, 78) and at other points along said strut-like members as necessary; and means (42) mounted on said standoff elements (15) for securing the triangular reflecting members (11, 94) in position away from said one rigid support matrix (12, 72) but so that they substantially mate with adjacent reflecting members (11, 94) to form the parabolic reflector (10, 74), characterised in that said one rigid support matrix (12, 72) terminates in a rim (30) which lies completely in a single plane and that the triangular reflecting members (11, 94) are rigid.

**Patentansprüche**

1. Stützstruktur für einen Parabolreflecktor (10, 74) großer Abmessung mit einer Anzahl dreieckiger Reflektorelemente (11, 94) mit einer im Verhältnis zur Größe des gesamten Reflektors geringen Größe, wobei die Stützstruktur eine starre Stützmatrix (12, 72) mit einer Vielzahl strebenförmiger Bauteile (13), die an Knotenpunkten (14, 78) zur Bildung einer Vielzahl dreieckiger Sektionen (80) zusammengefügt sind, aufweist, wobei Stehbolzenelemente (15, 76) mit der starren Stützmatrix (12, 72) in jeweils einem der Knotenpunkte (14, 78) verbunden sind und von der starren Stützmatrix abstehen und wobei Mittel (42) der Stehbolzenelemente (15, 76) der Befestigung der dreieckigen Reflektorelemente (11, 94) in einem Abstand von der Stützmatrix (12, 72) dienen, dadurch gekennzeichnet, daß die starre Stützmatrix (12, 72) in einem Rand (30) endet, der in seiner Gesamtheit in einer einzigen Ebene liegt.

2. Stüzstruktur nach Anspruch 1, dadurch gekennzeichnet, daß der Reflektor (10, 74) auf seiner gesamten Fläche einen im wesentlichen gleichen Abstand von der starren Stützmatrix (12, 72) hat.

3. Struktur nach Anspruch 1 oder Anspruch 2, dadurch gekennzeichnet, daß das Sicherungsmittel (42) auf jedem Stehbolzenelement (15, 76) entlang dem Stehbolzenelement verstellbar ist, um eine Fokussieren der Reflektorelemente (11, 94) zu ermöglichen.

4. Struktur nach Anspruch 3, dadurch gekennzeichnet, daß die Sicherungsmittel (42) so flexibel sind, daß geringe Bewegungen der Reflektorelemente (11, 94) ohne deren Beschädigung möglich sind.

5. Struktur nach einem der Ansprüche 1 bis 4, dadurch gekennzeichnet, daß sich die Stehbolzenelemente (15, 76) von der starren Stützmatrix (12, 72) aus im Bereich der Knotenpunkte (14, 78) senkrecht zu einer Ebene tangential zur Parabolfläche nach außen erstrecken.

6. Struktur nach einem der Ansprüche 1 bis 5, dadurch gekennzeichnet, daß die Länge der Stehbolzenelemente (15, 76) und der Abstand zwischen der starren Stützmatrix (12, 72) und den Sicherungsmitteln (42) so bemessen sind, daß eine Berührung zwischen den strebenförmigen Bauteilen (13) und den Reflektorelementen (11, 94) augeschlossen ist.

7. Struktur nach einem der Ansprüche 1 bis 6, dadurch gekennzeichnet, daß die Fläche jedes dreieckigen Abschnittes (80) der starren Stützmatrix (12, 72) im wesentlichen der von vier dreieckigen Reflektorelementen (11, 94) entspricht, die im wesentlichen untereinander flächengleich sind und einen weiteren Satz von Stehbolzenelementen (82) einschließen, von denen jeder mit einem der strebenförmigen Bauteile (13) in einem Bereich zwischen dem jeweiligen Paar von Knotenpunkten (14, 78), zwischen denen sich das strebenförmige Bauteil (13) erstreckt, verbunden ist und daß eine Sicherungsmittel (42) auf dem anderen Satz von Stehbolzenelementen (82) angeordnet ist, um zusammen mit den Stehbolzenelementen (15) des ersten Satzes der Stehbolzenelements eine Stütze für die jeweilige Gruppe von vier dreieckigen Reflektorelementen (11, 94) zu ergeben, die nebeneinander gegenüber jedem der dreieckigen Abschnitte (80) angeordnet sind.

8. Struktur nach einem der Ansprüche 1 bis 7, gekennzeichnet durch eine weitere starre Stützmatrix (70) die eine Vielzahl von zur Bildung einer Vielzahl dreieckiger Sektionen zu etwa der gekrümmten Fläche miteinander verbundener strebenförmiger Bauteile (80) aufweist, wobei die weitere Stützmatrix (70) zwischen der ersten Stützmatrix (72) und dem Reflektor (74) angeordnet ist und wobei die weitere Stützmatrix (70) so angeordnet ist, daß die Fläche jeder dreieckigen Sektion der ersten Stützmatrix (72) vier dreieckiger Sektionen (80) der weiteren Stützmatrix (70) entspricht.

9. Struktur nach Anspruch 8, gekennzeichnet durch weitere Stehbolzenelemente (92), von denen jedes mit einem entsprechenden der strebenförmigen Bauteile (86) der weiteren Stützmatrix (70) in einem Bereich zwischen einem entsprechenden Paar von Knotenpunkten (78), zwischen denen sich das strebenförmige Bauteil (86) erstreckt, verbunden ist, wobei weitere Sicherungsmittel (42) auf den weiteren Stehbolzenelementen (92) angeordnet sind, um vier dreieckige Reflektorelemente (94) auf jeder dreieckigen Sektion der weiteren Stützmatrix (70) abzustützen.

10. Struktur nach einem der Ansprüche 1 bis 9 zum Stützen eines parabolen Solarreflektors (10, 74) großer Abmessung, gekennzeichnet, durch nachsteuernde Stützmittel zum Stützen der ersten Stützmatrix (12, um diese der Sonnenbahn nachzusteuern.

11. Struktur nach Anspruch 10, gekennzeichnet durch ein Mittel, um die erste Stützmatrix (12) dem Azimuth der Sonne nachzuführen und durch ein Mittel (29) zum Einstellen der ersten Stützmatrix (12) auf die Sonnenhöhe.

12. Struktur nach Anspruch 11, dadurch gekennzeichnet, daß das Mittel zum Führen der ersten Stützmatrix (12) entsprechend dem Azimuth der Sonne erste und zweite Führungselemente (20 und 22) einschließt, wobei das erste Führungselement (20) in einer vorbestimmten Winkelstellung gegenüber der Erdoberfläche stationär gestützt wird und das zweite Führungselement (22) parallel zum ersten Führungselement (20) gestützt wird und mit der ersten Stützmatrix (12) verbunden ist, wobei weiter ein Mittel (31) zum Drehen des zweiten Führungsmittels (22) relativ zum ersten Führungsmittel (20) vorgesehen ist, so daß das zweite Führungsmittel (22) gedreht werden kann, um die eine Stützmatrix (12) dem Azimuth der Sonne folgen zu lassen.

13. Struktur nach Anspruch 12, dadurch gekennzeichnet, daß das Mittel zum Einstellen entsprechend der Höhe der Sonne ein Achsenmittel (27) einschließt, das drehbar die eine Stützmatrix (12) mit dem zweiten Führungsmittel (22) in einer Ebene verbindet, die im wesentlichen senkrecht zu der Drehebene des zweiten Führungsmittels (22) liegt, so daß die eine Stützmatrix (12) zum Führen entsprechend dem Höhenstand der Sonne gedreht werden kann.

14. Struktur nach Anspruch 13, dadurch gekennzeichnet, daß eine gedachte gerade Linie, die die Achsenmittel (27) an einander gegenüberliegenden Punkten der einen Stützmatrix (12) miteinander verbindet, zumindest angenähert den Schwerpunkt der einen Stützmatrix (12) schneidet.

15. Großdimensionierte Parabolreflektorvorrichtung mit einer starren Stützmatrix (12, 72), die eine Vielzahl strebenförmiger, zur Bildung einer Vielzahl dreieckiger, in einer Parabolform angeordneter Sektionen (80) miteinander verbundener Bauteile (13) aufweist; mit einer Vielzahl dreieckiger Reflektorelemente (11, 94) in einer Anordnung, daß eine parabole Reflektorfläche (10, 74) etwa der Form der einen starren Stützmatrix (12, 72) entsteht; mit einer Vielzahl Stehbolzenelemente (15), die zumindest an den Knotenpunkten (14, 78) und, soweit notwendig, an anderen Punkten entlang den strebenförmigen Bauteilen befestigt sind; und mit auf den Stehbolzenelementen (15) befestigten Mitteln (42) zur Sicherung der dreieckigen Reflektorglieder (11, 94) in einer von der einen starren Stützmatrix (12, 72) entfernten Stellung jedoch so, daß sie zumindest mit benachbarten Reflektorelementen (11, 94) zusammenstoßen, um den Parabolreflektor (10, 74) zu bilden, dadurch gekennzeichnet, daß die eine starre Stützmatrix (12, 72) in einem Rand (30) endet, der zur Gänze in einer einzigen Ebene liegt, und daß die dreieckigen Reflektorelemente (11, 94) starr sind.

## Revendications

1. Structure de support pour un réflecteur parabolique de grande dimension (10, 74) qui comprend une multiplicité d'organes réfléchissants triangulaires (11, 94) de dimension relativement faible par comparaison avec la dimension de l'ensemble du réflecteur, ladite structure de support comprenant une matrice de support rigide (12, 72) comportant une multiplicité d'organes semblables à des entretoises (13) reliés entre eux en des joints de matrice (14, 78) pour former une multiplicité de sections triangulaires (80) agencées en une configuration parabolique, un ensemble d'éléments d'écartement (15, 76) reliés chacun à ladite matrice de support rigide (12, 72) en un joint respectif parmi lesdits joints de matrice (14, 78) et s'étendant à partir de ladite matrice de support rigide (12, 72), et des moyens (42) montés sur lesdits éléments d'écartement (15, 76) pour fixer lesdits organes réfléchissants triangulaires (11, 94) en position à partir de ladite matrice de support (12, 72), caractérisée en ce que ladite matrice de support rigide (12, 72) se termine en un rebord (30) qui se situe entièrement dans un seul plan.

2. Structure suivant la revendication 1, caractérisée en ce que ledit réflecteur (10, 74) est pratiquement équidistant de ladite matrice de support rigide (12, 72) sur toute sa surface.

3. Structure suivant la revendication 1 ou la revendication 2, caractérisée en ce que les moyens de fixation (42) sur chaque élément d'écartement (15, 76) peuvent être déplacés le long de cet élément d'écartement (15, 76) afin de permettre une concentration des organes réfléchissants (11, 94).

4. Structure suivant la revendication 3, caractérisée en ce que lesdits moyens de fixation (42) sont suffisamment souples pour permettre un léger mouvement des éléments réfléchissants (11, 94) sand endommagement des organes réfléchissants (11, 94).

5. Structure suivant l'une quelconque des revendications 1 à 4, caractérisée en ce que lesdits éléments d'écartement (15, 76) s'étendent vers l'extérieur à partir de ladite matrice de support rigide (12, 72) à l'endroit desdits joints de matrice (14, 78), perpendiculairement à un plan qui est tangent à ladite surface continue à l'endroit dudit joint de matrice (14, 78).

6. Structure suivant l'une quelconque des revendications 1 à 5, caractérisé en ce que lesdits éléments d'écartement (15, 76) ont une longueur suffisante et il existe une distance suffisante entre ladite matrice de support rigide (12, 72) et lesdits moyens de fixation (42) pour empêcher un contact entre lesdits organes semblables à des entretoises (13) et les organes réfléchissants (11, 94).

7. Structure suivant l'une quelconque des revendications 1 à 6, caractérisée en ce que la superficie de chaque section triangulaire (80) de ladite matrice de support rigide (12, 72) est pratiquement celle de quatre des organes réfléchissants triangulaires (11, 94) qui ont pratiquement la même superficie et comportant un autre ensemble d'éléments d'écartement (82), reliés chacun à un organe respectif parmi les organes semblables à des entretoises (13) en un endroit intermédiaire de la paire respective de joints de matrice (14, 78) entre lesquels s'étend cet organe semblable à une entretoise (13), et des moyens de fixation (42) montés sur l'autre ensemble d'éléments d'écartement (82) pour offrir, conjointement avec des moyens de fixation (42) montés sur les éléments d'écartement (15) dudit premier ensemble, un support pour un groupe respectif de quatre des organes réfléchissants triangulaires (11, 94) agencés côte à côte à l'opposé de chacune des sections triangulaires (80).

8. Structure suivant l'une quelconque des revendications 1 à 7, comportant une autre matrice de support rigide (70) qui comporte une multiplicité d'organes semblables à des entretoises (86) reliés entre eux pour former une multiplicité de sections triangulaires qui s'approchent de la configuration de la surface incurvée, caractérisée en ce que l'autre matrice de support (70) est située entre ladite première matrice de support (72) et le réflecteur (74), et en ce que ladite autre matrice de support (70) est agencée de telle sorte que la superficie de chaque section triangulaire de ladite première matrice de support (72) englobe quatre sections triangulaires (80) de ladite autre matrice de support (70).

9. Structure suivant la revendication 8, comprenant d'autres éléments d'écartement (92) reliés chacun á un organe respectif parmi les organes semblables à des entretoises (86) de ladite autre matrice de support (70) en un endroit intermédiaire de la paire respective de joints de matrice (78) entre lesquels s'étend cet organe semblable à une entretoise (86), et des moyens de fixation (42) montés sur les autres éléments d'écartement (92) afin de supporter quatre organes réfléchissants triangulaires (94) dans chaque section triangulaire de ladite autre matrice de support (70).

10. Structure suivant l'une quelconque des revendications 1 à 9, destinée à supporter un réflecteur solaire parabolique de grande dimension (10, 74), comprenant un moyen de support de poursuite supportant ladite matrice de support (12) pour suivre le parcours du soleil.

11. Structure suivant la revendication 10, comprenant des moyens pour suivre l'azimut du soleil avec ladite matrice de support (12) et des moyens (29) pour suivre l'altitude du soleil avec ladite matrice de support (12).

12. Structure suivant la revendication 11, caractérisée en ce que lesdits moyens pour suivre l'azimut du soleil comprennent des premier et second organes de poursuite (20 et 22), ledit premier organe de poursuite (20) étant supporté de façon stationnaire en une position angulaire prédéterminée par rapport au sol et ledit second organe de poursuite (22) étant supporté parallèlement audit premier organie de poursuite (20) et étant relié à ladite matrice de support (12), et comprend en outre des moyens (31) pour faire tourner ledit second organe de poursuite (22) par rapport au premier organe de poursuite (20), de telle sorte que le second organe de poursuite (22) peut être mis en rotation afin que ladite matrice de support (12) suive l'azimut du soleil.

13. Structure suivant la revendication 12, caractérisée en ce que lesdits moyens pour suivre l'altitude du soleil comprennent des moyens d'axe (27) reliant à rotation ladite matrice de support (12) audit seconde organe de poursuite (22) dans un plan pratiquement perpendiculaire au plan de rotation dudit second organe de poursuite (22) de telle sorte que ladite matrice de support (12) puisse être amenée à tourner pour suivre l'altitude du soleil.

14. Structure suivant la revendication 13, caractérisée en ce qu'une ligne droite imaginaire reliant les moyens d'axe (27) sur les côtés opposés de ladite matrice de support (12) s'étend pratiquement à travers le centre de gravité de ladite matrice de support (12).

15. Appareil de réflecteur parabolique de grande dimension, comprenant une matrice de support rigide (12, 72) comportant une multiplicité d'organes semblables à des entretoises (13) reliés entre eux en des joints de matrice (14, 78) pour former une multiplicité de sections triangulaires (80) agencées en une configuration parabolique, une multiplicité d'organes réfléchissants triangulaires (11, 94) agencés pour former une surface de réflecteur parabolique (10, 74) ayant approximativement la configuration de ladite matrice de support rigide (12, 72), une multiplicité d'éléments d'écartement (15) reliés au moins auxdits joints de matrice (14, 78) et à d'autres points le long desdits organes semblables à des entretoises suivant les nécessités, et des moyens (42) montés sur lesdits éléments d'écartement (15) pour fixer les organes réfléchissants triangulaires (11, 94) en position à partir de ladite matrice de support rigide (12, 72), et de telle sorte qu'ils s'adaptent pratiquement avec des organes réfléchissants adjacents (11, 94) pour former le réflecteur parabolique (10, 74), caractérisé en ce que ladite matrice de support rigide (12, 72) se termine en un rebord (30) qui se situe complètement dans un seul plan, et en ce que les organes réfléchissants triangulaires (11, 94) sont rigides.

Fig. 1

Fig. 2

Fig. 3

Fig. 4

Fig. 5

Fig. 6

2

Fig. 7

Fig. 8